# EUROPEAN PATENT SPECIFICATION

(11) **EP 3 482 573 B1**
(45) Date of publication and mention of the grant of the patent: **14.08.2024**
(21) Application number: 17720843.6
(22) Date of filing: 08.05.2017
(51) Int. Cl.: H04L 65/10, H04L 65/1059, H04L 67/12, H04L 65/60, H04W 4/00

(54) **METHOD FOR USING A MOBILE TERMINAL IN A MOBILE COMMUNICATION NETWORK, WHEREIN A NETWORK NODE OF THE MOBILE COMMUNICATION NETWORK OR A NETWORK NODE RELATED OR ASSIGNED TO THE MOBILE COMMUNICATION NETWORK HOSTS OR PROVIDES A VIRTUALIZED USER EQUIPMENT FUNCTIONALITY, SYSTEM FOR USING A MOBILE TERMINAL IN A MOBILE COMMUNICATION NETWORK, MOBILE COMMUNICATION NETWORK, MOBILE TERMINAL, PROGRAM AND COMPUTER PROGRAM PRODUCT**
VERFAHREN ZUR VERWENDUNG EINES MOBILEN ENDGERÄTS IN EINEM MOBILKOMMUNIKATIONSNETZWERK, WOBEI EIN NETZWERKKNOTEN DES MOBILKOMMUNIKATIONSNETZWERKS ODER EIN NETZWERKKNOTEN IM ZUSAMMENHANG MIT DEM MOBILKOMMUNIKATIONSNETZWERK ODER EIN DEM MOBILKOMMUNIKATIONSNETZWERK ZUGEORDNETER NETZWERKKNOTEN DIE FUNKTIONALITÄT EINES VIRTUALISIERTEN BENUTZERGERÄTS HOSTED ODER BEREITSTELLT, SYSTEM ZUR VERWENDUNG EINES MOBILEN ENDGERÄTS IN EINEM MOBILKOMMUNIKATIONSNETZWERK, MOBILKOMMUNIKATIONSNETZWERK, MOBILES ENDGERÄT, PROGRAMM UND COMPUTERPROGRAMMPRODUKT
PROCÉDÉ D'UTILISATION D'UN TERMINAL MOBILE DANS UN RÉSEAU DE COMMUNICATION MOBILE, NOEUD DE RÉSEAU DU RÉSEAU DE COMMUNICATION MOBILE OU NOEUD DE RÉSEAU LIÉ OU ASSOCIÉ À DES HÔTES DE RÉSEAU DE COMMUNICATION MOBILE VIRTUALISÉ OU FOURNISSANT UNE FONCTIONNALITÉ D'ÉQUIPEMENT D'UTILISATEUR VIRTUELLE, SYSTÈME D'UTILISATION D'UN TERMINAL MOBILE DANS UN RÉSEAU DE COMMUNICATION MOBILE, RÉSEAU DE COMMUNICATION MOBILE, TERMINAL MOBILE, PROGRAMME ET PRODUIT DE PROGRAMME INFORMATIQUE

(30) Priority: 08.07.2016 EP 16178712
(43) Date of publication of application: 15.05.2019
(73) Proprietor: Deutsche Telekom AG, 53113 Bonn (DE)
(72) Inventor: LAUSTER, Reinhard, 3100 St. Pölten (AT)
(74) Representative: Schwöbel, Thilo K.
(86) International application number: PCT/EP2017/060954
(87) International publication number: WO 2018/007048

(56) References cited:
- EP-A1- 2 879 362
- JP-A- 2005 277 654
- US-A1- 2011 093 567
- US-A1- 2012 296 963
- US-A1- 2013 173 756

## Description

### BACKGROUND

The present invention relates a method for using a system comprising a mobile terminal (21), a user equipment-related virtual instance or virtual machine (22), and a network node (101) of a mobile communication network, wherein the network node of the mobile communication network or related to the mobile communication network hosts or provides the virtualized user equipment functionality.

Furthermore, the present invention relates to a system comprising a mobile terminal (21), a user equipment-related virtual instance or virtual machine (22), and a network node (101) of a mobile communication network, wherein the network node of the mobile communication network or related to the mobile communication network hosts or provides the virtualized user equipment functionality.

Additionally, the present invention relates to a mobile communication network for using a mobile terminal as part of an inventive system, as well as to a mobile terminal for being used in or in connection with a mobile communication network as part of an inventive system.

Furthermore, the present invention relates to a program and to a computer program product for using a mobile terminal in a mobile communication network.

The present invention relates to the area of wireless mobile communication networks, typically comprising a multitude of different user equipments or mobile terminals. Such conventionally used user equipments are typically comparatively complex and costly, due to always higher requirements on hardware and software. Additionally, incompatibility with regard to software components and/or hardware components, often due to vendor-specific and/or operator-specific requirements regarding the user equipment, are sources of reduced user experience, especially for IMS (Internet Multimedia Subsystem) services like, e.g., VoLTE (Voice over LTE (Long Term Evolution)).

US 2012296963 A1 is directed to a simplified mobile terminal system based on OWA (open wireless architecture) mobile cloud architecture to support the convergence and integration of various wireless standards including existing and future mobile cellular standards, wireless local area network standards, wireless personal area network standards, broadband wireless access standards and wireline standards. EP 2879362 A1 relates to a communication system. US 2011093567 A1 reveals a mobile terminal for providing a mobile cloud service in a mobile environment. JP 2005277654 A relates to a mobile phone communication system. US 2013173756 A1 reveals methods of operation modes for mobile traffic optimization and the concurrent management of optimized and non-optimized traffic.

### SUMMARY

An object of the present invention is to provide an effective and simple solution such that user equipments and/or mobile terminals get cheaper and less complex in hardware and software, easier to use for users of such user equipments and/or mobile terminals, and easier to specifically configure according to the needs of such users.

The object of the present invention is achieved by a method according to claim 1.

It is thereby advantageously possible, according to the present invention, that the user equipment or the mobile terminal, i.e. the mobile device having a user interface to the user, can be provided much cheaper and also less complex in hardware and software. The new approach according to the present invention enables operators of mobile communication networks to deploy, for all end-customers, virtualized instances for user equipment services that are configured in a network specific manner. Additionally, such virtualized instances (or user equipment related virtual instances or virtual machines) can advantageously be customized with centrally stored personal and network based user profile data. Additionally, it is advantageously possible according to the present invention that such mobile terminals that are less complex compared to conventionally known user equipments have an increased battery lifetime and a better performance related to the environmental (especially regarding pollution).

According to the present invention, the functionality of a conventionally known user equipment is split in the functionality of a mobile terminal on the one hand, and a user equipment-related virtual instance or virtual machine on the other hand. The mobile communication network typically comprises an access network and a core network, wherein the access network comprises a plurality of base station entities and corresponding radio cells in order to provide radio access to the mobile communication network for a certain number of devices or mobile devices. Such devices or mobile devices typically comprise conventionally known user equipments, i.e. user equipments that comprise not only functionalities related to providing the user interface and providing the data transmission capacity (i.e. components and/or circuitry related to a display element, radio components such as an antenna, etc.) but also functionalities and processing power related to functionalities and applications such as calendar applications, gaming applications, data processing applications, database applications and the like. The core network of the mobile communication network typically comprises a plurality of network nodes providing functionalities such as mobility management, identity and/or subscriber management and the like.

The above mentioned conventionally known user equipments have grown more and more complex and costly physically and especially regarding the software components installed or stored on such mobile devices. Only in order to provide a rough estimation, current smartphone processors of high-end smartphones are typically able to perform at least one GFlops, if not a couple of or 10 to 20 GFlops (10⁹ floating point operations per second) (compared to typical processors of desktop or laptop/notebook computers being in many cases able to perform at least 50 to 100 GFlops). Such a processing performance of conventional user equipments is typically required due to a multitude of different functionalities of the operating system and/or of a multitude of different software applications (apps).

Due to the increased software and hardware complexity of such conventionally known user equipment, it is becoming more and more difficult and time consuming (as well as dangerous in case of insecure configuration settings) for an end-user of such devices to correctly and/or securely configure, update and/or administrate the complex ecosystem of different software components (being either natively part of the respective operating system or firmware of the devices and/or consisting of additional software components already provisioned for by the original equipment manufacturer of the devices and/or being additional software components installed by the end-user of the mobile device).

According to the present invention, it is advantageously possible to realize the functionality of a conventional, powerful and complex user equipment or mobile device by means of using a new approach, namely to realize the functionality of the user equipment by means of a mobile terminal on the one hand, and a virtualized user equipment functionality on the other hand, wherein the virtualized user equipment functionality is realized by means of hosting or providing a user equipment-related virtual instance or virtual machine within a network node of the mobile communication network, especially as part of the core network of the mobile communication network. Together, both the mobile terminal and the user equipment-related virtual instance or virtual machine (i.e. the virtualized user equipment functionality) are providing the functionality of a conventionally known user equipment; i.e. the user equipment functionality (or partial user equipment functionality) are realized and deployed in the mobile communication network, typically in a network cloud of the operator of the mobile communication network. Such virtual user equipment instances can be flexibly created and customized, e.g. depending on customer requirements and/or depending on operator service requirements. Additionally, it is advantageously possible to add (and/or store and/or backup) user configuration data, which means that (possibly sensitive) user data are able to be stored (solely) in the mobile communication network (e.g. in a cloud environment of the mobile communication network) such that in case of theft of loss of the mobile terminal the user data are protected.

According to the present invention, the mobile communication network (i.e. especially its access network) is especially accessed in a classical manner, i.e. by the user equipment, wherein in what is acting (from the perspective of the mobile communication network or at least of its access network) as the user equipment is in effect the combination of the mobile terminal and the user equipment-related virtual instance; this combination being hereinafter also called the combined user equipment. This means that according to the present invention the combined user equipment accessing the mobile communication network means that the mobile terminal accesses, in a first processing step, the user equipment-related virtual instance or virtual machine (i.e. the virtualized user equipment functionality) - typically using a thin client software and/or using thin client mechanisms or functionalities -, and, in a second processing step, the virtualized user equipment functionality acts (from the perspective of the mobile communication network or at least of its access network) as the user equipment, i.e. as if a classical user equipment would have requested a specific communication service from the mobile communication network. This advantageously allows to realize a resource optimization on the terminal side, i.e. the mobile terminal is able to be provided with less functionality and complexity compared to conventionally known user equipments, and, especially, by means of using this inventive approach, incompatibility issues, e.g. with services or communication such as IMS services and/or (IMS) voice services), can be reduced.

According to the present invention, the inventive method comprises at least a first step, during which the user equipment-related virtual instance or virtual machine is initialized at the network node of the mobile communication network, and a second step, subsequent to the first step, during which a service - especially a communication service - is requested by the user equipment or provided to the user equipment by the mobile communication network, wherein - with respect to such communication service - the mobile terminal and the user equipment-related virtual instance or virtual machine together act as the user equipment.

According to a further embodiment of the present invention, in the second step, the service requested by the user equipment is a communication service and/or a processing service, and/or wherein the mobile terminal comprises a user interface and acts as a mobile thin client towards the user equipment-related virtual instance or virtual machine, the mobile thin client especially relying on the execution of thin client software code (especially on the mobile terminal) to connect the user interface - especially a touch screen and/or media components like a loudspeaker and/or a camera and/or a microphone - of the mobile terminal with the virtualized user equipment functionality in order to execute application-related software code on the virtualized user equipment functionality of the network node of the mobile communication network.

By means of the service requested by the user equipment being a communication service and/or a processing service and/or by means of the mobile terminal, especially acting as a mobile thin client towards the user equipment-related virtual instance or virtual machine, relying on the execution of thin client software code (especially on the mobile terminal) to connect the user interface of the mobile terminal with the virtualized user equipment functionality in order to execute application-related software code on the virtualized user equipment functionality of the network node of the mobile communication network, it is advantageously possible that arbitrary communication and/or processing services can be provided by the virtualized user equipment functionality and/or by the mobile communication network, and, especially, the mobile terminal being relieved not only from the task of executing application-related software code related to the requested service but also from the need to have a corresponding (application-related) software component installed and correctly configured. According to the present invention, the mobile terminal comprises a user interface, i.e. physical means to interact with the user or customer or subscriber. Such physical means (collectively referred to by the term user interface) include, but are not limited to physical means to visually interact with a person and/or physical means to audibly or acoustically interact with a person and/or physical means to interact in a haptic and/or tactile manner, such as, e.g., a loudspeakter, a microphone, a vibration actuator, a display, a touch display, a camera, an authentication device such as a fingerprint scanner, or the like. The thin client software of the mobile terminal enables the mobile terminal and the virtualized user equipment functionality of the network node to connect the user interface (physically present at the mobile terminal) with the virtualized user equipment functionality.

According to the present invention, the service, especially the communication service, corresponds to at least a part of the functionalities of the user equipment and at least one out of the following:
-- SIP-related (Session Initiation Protocol-related) communication services,
-- IMS-related (IP Multimedia Subsystem-related) services.
According to a further embodiment of the present invention, the service, corresponds to at least one out of the following:
voices services and/or emergency services and/or especially video services and/or SMS over IP services and/or RCS (Rich Communication Service) services.

Thereby, it is advantageously possible according to the present invention that specific services and/or functionalities, especially relating to SIP(-related) communication services and/or other IMS-related services, are provided by means of using the combination of the mobile terminal and the virtualized user equipment functionality.

According to a further embodiment of the present invention, the communication service is provided as a virtualized user equipment application or as a network function in the mobile communication network, and/or
wherein a mobile thin client interface is realized between the mobile terminal, on the one hand, and the user equipment-related virtual instance or virtual machine (or the virtualized user equipment functionality), on the other hand.

According to the present invention, it is thereby advantageously possible that application-related software components related to the specific virtualized user equipment application and/or to the specific network function in the mobile communication network do not need to be installed (and do not need to be maintained and/or updated and/or configured) on the mobile terminal.

According to a further embodiment of the present invention, the first step involves initializing the user equipment-related virtual instance or virtual machine from a template repository of virtual instances or virtual machines and/or from an operator profile repository and/or from a user data repository, wherein the template repository and/or the operator profile repository and/or the user data repository is part or assigned to the mobile communication network, and/or wherein especially the configuration and/or the settings of the user equipment-related virtual instance or virtual machine corresponds to a configuration and/or to settings that are specific to the operator of the mobile communication network.

According to the present invention, it is thereby advantageously possible that the deployment of the user equipment-related virtual instance or virtual machine can be realized in a simple, easy and effective manner.

According to a further embodiment of the present invention, the method additionally comprises a third step, either preceding the first step or subsequent to the second step,
wherein in the third step, a further communication service is requested by the mobile terminal or provided to the mobile terminal by the mobile communication network, wherein - with respect to the further communication service - the mobile terminal acts either as the user equipment or as another user equipment of the mobile communication network.

Thereby, it is advantageously possible according to the present invention that - among all the services, especially communication services, and/or among all the functionalities requested by the mobile terminal towards the mobile communication network -
-- a part of the requested functionalities and/or (communication and/or processing) services of the mobile terminal is provided (to the mobile terminal) by means of the mobile terminal acting - together with the virtualized user equipment functionality (i.e. the user equipment-related virtual instance or virtual machine) - as the user equipment (i.e. a user equipment), and that
-- another part of the requested functionalities and/or (communication and/or processing) services of the mobile terminal (this other part of functionalities and/or services being hereinafter also called further communication services) is provided (to the mobile terminal) by means of the mobile terminal acting (alone, i.e. without the virtualized user equipment functionality / user equipment-related virtual instance or virtual machine) as:
   -- the user equipment (or subscriber) of the mobile communication network (i.e. in this case, the mobile terminal - acting (alone) as the user equipment - is considered, by the mobile communication network, as having the same (user equipment and/or subscriber) identity than the user equipment being realized (regarding the first part of the requested functionalities and/or services) by the combination of the mobile terminal on the one hand and the virtualized user equipment functionality / user equipment-related virtual instance or virtual machine on the other hand), or as
   -- another user equipment of the mobile communication network (i.e. in this latter case, the mobile terminal - acting (alone) as the user equipment - is considered, by the mobile communication network, as having a different (user equipment and/or subscriber) identity as compared to the user equipment and/or subscriber identity used by the user equipment being realized by the combination of the mobile terminal on the one hand and the virtualized user equipment functionality / user equipment-related virtual instance or virtual machine on the other hand).

Furthermore, the present invention relates to a system according to claim 7.

Thereby, it is advantageously possible to provide a system that is capable of being flexibly used such that the user equipment or the mobile terminal, i.e. the mobile device having a user interface to the user, can be provided much cheaper and also less complex in hardware and software.

According to the present invention it is furthermore preferred - especially with respect to the inventive system - that the system is configured such that the mobile terminal acts as a mobile thin client towards the user equipment-related virtual instance or virtual machine.

According to the present invention- especially with respect to the inventive system -the service corresponds to at least a part of the functionalities of the user equipment and at least one out of the following:
-- SIP-related (Session Initiation Protocol-related) communication services,
-- IMS-related (IP Multimedia Subsystem-related) services.
According to the present invention it is furthermore preferred - especially with respect to the inventive system - that the communication service corresponds to at least one out of the following:
voices services and/or emergency services and/or especially video services and/or SMS over IP services and/or RCS (Rich Communication Service) services.

According to the present invention it is furthermore preferred - especially with respect to the inventive system - that the network node of the mobile communication network is a network node of either the access network or of the core network of the mobile communication network or a network node of a network connected to the mobile communication network, especially within a cloud environment of the mobile communication network.

According to the present invention it is furthermore preferred - especially with respect to the inventive system - that the communication service is provided as a virtualized user equipment application or as a network function in the mobile communication network, and/or
wherein a mobile thin client interface is realized between the mobile terminal, on the one hand, and the user equipment-related virtual instance or virtual machine, on the other hand.

Additionally, the present invention relates to a program comprising a computer readable program code which, when executed on a computer or on a network node of a mobile communication network or on a user equipment-related virtual instance or virtual machine or on a mobile terminal, or in part on the network node of the mobile communication network and/or in part on the user equipment-related virtual instance or virtual machine and/or in part on the mobile terminal, causes the computer or the network node of the mobile communication network and/or the user equipment-related virtual instance or virtual machine and/or the mobile terminal to perform the inventive method.

Still additionally, the present invention relates to a computer program product for using a mobile terminal in a mobile communication network, the computer program product comprising a computer program stored on a storage medium, the computer program comprising program code which, when executed on a computer or on a network node of a mobile communication network or on a user equipment-related virtual instance or virtual machine or on a mobile terminal, or in part on the network node of the mobile communication network and/or in part on the user equipment-related virtual instance or virtual machine and/or in part on the mobile terminal, causes the computer or the network node of the mobile communication network and/or the user equipment-related virtual instance or virtual machine and/or the mobile terminal to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

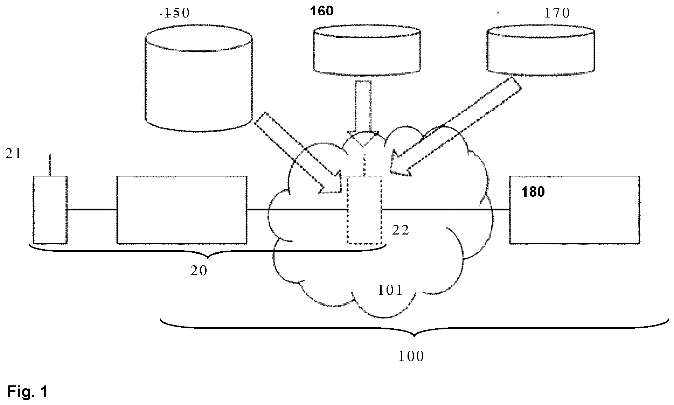

Figure 1 schematically illustrate a system according to the present invention, comprising a mobile communication network, and a user equipment connected to the mobile communication network, wherein the functionality of the user equipment is split between a mobile terminal and a user equipment-related virtual instance or virtual machine hosted on a network node of the mobile communication network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, e.g. a mobile communication network 100 such as a public land mobile network 100 is schematically shown as part of a system according to the present invention, wherein the system comprises, besides the mobile communication network 100, a mobile terminal 21.

A network node 101 of the mobile communication network 100 (or related and/or assigned to the mobile communication network 100, such as, e.g., being part of a cloud environment) hosts or provides a virtualized user equipment functionality by means of hosting or providing a user equipment-related virtual instance or virtual machine 22. Together, both the mobile terminal 21 and the user equipment-related virtual instance or virtual machine 22 realize the functionality of a user equipment 20 in or connected to the mobile communication network 100.

According to the present invention, the combination of the mobile terminal 21 and the user equipment-related virtual instance or virtual machine 22 is enabled to realize the functionality of a user equipment 20 in or connected to the mobile communication network 100. According to one embodiment of the present invention, this (i.e. that it is the combination of the mobile terminal 21 and the user equipment-related virtual instance or virtual machine 22 that realizes the functionality of the user equipment 20 in or connected to the mobile communication network 100) refers to all or almost all services and/or functionalities (especially communication services to be requested from the mobile communication network 100) that can be requested by using the mobile terminal 21. According to another embodiment of the present invention, this (i.e. that it is the combination of the mobile terminal 21 and the user equipment-related virtual instance or virtual machine 22 that realizes the functionality of the user equipment 20 in or connected to the mobile communication network 100) refers only to a part of services and/or functionalities (to be requested from the mobile communication network 100) that can be requested by using the mobile terminal 21, i.e. there are services and/or functionalities (to be requested from the mobile communication network 100) that can be requested by using the mobile terminal 21 alone, i.e. without using the user equipment-related virtual instance or virtual machine 22; in such situations, it is the mobile terminal 21 alone that acts as the user equipment 20 with regard to the mobile communication network 100.

According to the present invention, the operator of the mobile communication network 100 is able to create, depending on user demand, virtual user equipments - i.e. a user equipment-related virtual instance or virtual machine 22 -, e.g. a business user equipment and/or a private user equipment) or partial user equipment functions (e.g. a complete Android OS, or an user equipment with only an IMS VoLTE client). These virtual functions are optimized and customized by the operator of the mobile communication network 100 to guarantee a frictionless interoperability with the core network (e.g. IMS core) of the mobile communication network 100. The creation process for such virtual user equipments (i.e. user equipment-related virtual instances or virtual machines 22) is based on a generic user equipment template database 150 (or template repository 150) that contains, e.g., android basis software or a vendor specific user equipment image. According to an exemplary embodiment of the present invention, these user equipment templates (i.e. templates of user equipment-related virtual instances or virtual machines 22) are configured by operator profile information (via a database, which is hereinafter also called an operator profile repository 160). The operator profile repository 160 typically contains all settings to interoperate with the mobile communication network 100 and/or with specific parts thereof such as an IMS network 180 or an IMS core 180). Furthermore according to an exemplary embodiment of the present invention, user data and user personal settings for these virtual user equipment instances (i.e. user equipment-related virtual instances or virtual machines 22) are able to be added from an additional operator data base (hereinafter called user data respository 170) and included to enable a user customized instance of any client serving a service (e.g. IMS Voice, RCS).

To connect to the virtual instances (i.e. to the user equipment-related virtual instances or virtual machines 22), the mobile terminal 21 needs to have all functionalities to connect to the radio or fixed network access and the IP packet core of the mobile communication network 100. When the mobile terminal 21 has established the IP connection to the mobile communication network 100 (or to the operator network), the user related virtual instances (i.e. the user equipment-related virtual instances or virtual machines 22) are typically connected via a special software ("thin client" software) which connects the user interface of the mobile terminal 21, via the IP protocol (Internet Protocol) (e.g. using the keyboard, touchscreen, audio system of the mobile terminal 21), to the virtual UE (i.e. the user equipment-related virtual instances or virtual machines 22) or in the operator core network (i.e. the mobile communication network 100). Such "Thin client"-based software is much simpler than providing the user equipment software of conventionally known user equipments and can be easily standardized. Hence, this results in a simpler implementation of the user equipment 20 (i.e. the combination of the mobile terminal 21 and the (corresponding) user equipment-related virtual instance or virtual machine 22) according to the present invention, less hardware requirements and better battery lifetime for the mobile terminal 21. On the network side, the operator specific customization of the user equipment-related virtual instances or virtual machines 22 can be achieved easily, and, additionally, also the deployment of such user equipment-related virtual instances or virtual machines 22 (i.e. the virtualized user equipments and/or virtualized client function), especially in a cloud environment, which helps to optimize the use of resources of the mobile communication network 100.

According to the present invention, it is thereby advantageously possible that one or more virtual user equipments (i.e. user equipment-related virtual instances or virtual machines 22) can be deployed for a customer of the mobile communication network 100. Furthermore, it is possible to dynamically create and/or delete and/or modify such virtual instances for a user equipment (i.e. the user equipment-related virtual instances or virtual machines 22) in the mobile communication network 100 or the operator network by using several databases where user data operator setting and UE templates are stored.

## Claims

1. Method for using a system comprising a mobile terminal (21), a user equipment-related virtual instance or virtual machine (22), and a network node (101) of a mobile communication network (100),
wherein the mobile communication network (100) comprises an access network and a core network,
wherein the network node (101) of the mobile communication network (100) or related to the mobile communication network (100) hosts or provides a virtualized user equipment functionality by means of hosting or providing the user equipment-related virtual instance or virtual machine (22),
wherein together, both the mobile terminal (21) and the user equipment-related virtual instance or virtual machine (22) realize the functionality of a user equipment (20) irrer connected to the mobile communication network (100) wherein the method comprises the following steps:
-- in a first step, the user equipment-related virtual instance or virtual machine (22) is initialized at the network node (101) of the mobile communication network (100), wherein the first step involves creating the user equipment-related virtual instance or virtual machine (22) based on a generic user equipment template database (150) that contains android basis software or a vendor specific user equipment image and configuring the user equipment-related virtual instance or virtual machine (22) based on operator profile information via an operator profile repository (160) and based on user personal settings via a user data repository (170), wherein the configuration of the user equipment-related virtual instance or virtual machine (22) corresponds to a configuration that is specific to the operator of the mobile communication network (100), and optimized by the operator of the mobile communication network (100) to guarantee a frictionless interoperability with the core network of the mobile communication network (100), and is customized for a user;
wherein the mobile terminal (21) is connected to the user equipment-related virtual instance or virtual machine (22) via a thin client software which connects the user interface of the mobile terminal (21), via IP protocol, to the user equipment-related virtual instance or virtual machine (22),
-- in a second step, subsequent to the first step, a service is requested by the user equipment (20) or provided to the user equipment (20) by the mobile communication network (100), wherein - with respect to the service - the mobile terminal (21) and the user equipment-related virtual instance or virtual machine (22) together act as the user equipment (20),
wherein the service corresponds to at least a part of the functionalities of the user equipment (20) and at least one out of the following:
-- Session Initiation Protocol-related, SIP-related, communication services,
-- IP Multimedia Subsystem-related, IMS-related, services.

2. Method according to claim 1, wherein in the second step, the service requested by the user equipment (20) is a communication service and/or a processing service, and/or
wherein the mobile terminal (21) comprises a user interface , the mobile thin client especially relying on the execution of thin client software code to connect the user interface - especially a touch screen and/or media components like a loudspeaker and/or a camera and/or a microphone - of the mobile terminal (21) with the virtualized user equipment functionality in order to execute application-related software code on the virtualized user equipment functionality of the network node (101) of the mobile communication network (100).

3. Method according to one of the preceding claims, wherein the service, corresponds to at least one out of the following:
voices services and/or emergency services and/or video services and/or SMS over IP services and/or RCS (Rich Communication Service) services.

4. Method according to one of the preceding claims, wherein the communication service is provided as a virtualized user equipment application or as a network function in the mobile communication network (100), and/or
wherein a mobile thin client interface is realized between the mobile terminal (21), on the one hand, and the user equipment-related virtual instance or virtual machine (22), on the other hand.

5. Method according to one of the preceding claims, wherein the generic user equipment template database (150) and/or the operator profile repository (160) and/or the user data repository (170) is part or assigned to the mobile communication network (100).

6. Method according to one of the preceding claims, wherein the method additionally comprises a third step, either preceding the first step or subsequent to the second step,
wherein in the third step, a further communication service is requested by the mobile terminal (21) or provided to the mobile terminal (21) by the mobile communication network (100), wherein - with respect to the further communication service - the mobile terminal (21) acts either as the user equipment (20) or as another user equipment (20') of the mobile communication network (100).

7. System comprising a mobile terminal (21), a user equipment-related virtual instance or virtual machine (22), and a network node (101) of a mobile communication network (100),
wherein the mobile communication network (100) comprises an access network and a core network,
wherein the network node (101) of the mobile communication network (100) or related to the mobile communication network (100) hosts or provides a virtualized user equipment functionality by means of hosting or providing the user equipment-related virtual instance or virtual machine (22),
wherein together, both the mobile terminal (21) and the user equipment-related virtual instance or virtual machine (22) realize the functionality of a user equipment (20) irrer connected to the mobile communication network (100) wherein the system is configured such that:
-- the user equipment-related virtual instance or virtual machine (22) is initialized at the network node (101) of the mobile communication network (100), wherein initializing the user equipment-related virtual instance or virtual machine (22) at the network node (101) of the mobile communication network (100) involves creating the user equipment-related virtual instance or virtual machine (22) based on a generic user equipment template database (150) that contains android basis software or a vendor specific user equipment image and configuring the user equipment-related virtual instance or virtual machine (22) based on operator profile information via an operator profile repository (160)and based on user personal settings via a user data repository (170), wherein the configuration of the user equipment-related virtual instance or virtual machine (22) corresponds to a configuration that is specific to the operator of the mobile communication network (100), and optimized by the operator of the mobile communication network (100) to guarantee a frictionless interoperability with the core network of the mobile communication network (100), and is customized for a user;
wherein the mobile terminal (21) is connected to the user equipment-related virtual instance or virtual machine (22) via a thin client software which connects the user interface of the mobile terminal (21), via IP protocol, to the user equipment-related virtual instance or virtual machine (22),
-- a communication service is requested by the user equipment (20) or provided to the user equipment (20) by the mobile communication network (100), wherein - with respect to such communication service - the mobile terminal (21) and the user equipment-related virtual instance or virtual machine (22) together act as the user equipment (20),
wherein the service corresponds to at least a part of the functionalities of the user equipment (20) and at least one out of the following:
-- Session Initiation Protocol-related, SIP-related, communication services,
-- IP Multimedia Subsystem-related, IMS-related, services.

8. System according to claim 7, wherein the network node (101) of the mobile communication network (100) is a network node (101) of either the access network or of the core network of the mobile communication network (100) or a network node (101) of a network connected to the mobile communication network (100).

9. System according to one of claims 7 to 8, wherein the communication service corresponds to at least one out of the following:
voices services and/or emergency services and/or video services and/or SMS over IP services and/or RCS (Rich Communication Service) services.

10. System according to one of claims 7 to 9, wherein the communication service is provided as a virtualized user equipment application or as a network function in the mobile communication network (100), and/or
wherein a mobile thin client interface is realized between the mobile terminal (21), on the one hand, and the user equipment-related virtual instance or virtual machine (22), on the other hand.

11. Program comprising a computer readable program code which, when executed in part on the network node (101) of the mobile communication network (100) and in part on the user equipment-related virtual instance or virtual machine (22) and in part on the mobile terminal (21), causes the network node (101) of the mobile communication network (100) and the user equipment-related virtual instance or virtual machine (22) and the mobile terminal (21) to perform a method according one of claims 1 to 6.

12. Computer program product for using a mobile terminal (21) in a mobile communication network (100), the computer program product comprising a computer program stored on a storage medium, the computer program comprising program code which, when executed in part on the network node (101) of the mobile communication network (100) and in part on the user equipment-related virtual instance or virtual machine (22) and in part on the mobile terminal (21), causes the network node (101) of the mobile communication network (100) and the user equipment-related virtual instance or virtual machine (22) and the mobile terminal (21) to perform a method according one of claims 1 to 6.

## Patentansprüche

1. Verfahren zur Nutzung eines Systems, umfassend ein mobiles Endgerät (21), eine benutzerausrüstungsbezogene virtuelle Instanz oder virtuelle Maschine (22) und einen Netzknoten (101) eines Mobilkommunikationsnetzes (100),
wobei das Mobilkommunikationsnetz (100) ein Zugangsnetz und ein Kernnetz umfasst,
wobei der Netzknoten (101), der zu dem Mobilkommunikationsnetz (100) gehört oder zu dem Mobilkommunikationsnetz (100) in Beziehung steht, eine virtualisierte Benutzerausrüstungsfunktionalität hostet oder bereitstellt, indem er die benutzerausrüstungsbezogene virtuelle Instanz oder virtuelle Maschine (22) hostet oder bereitstellt,
wobei sowohl das mobile Endgerät (21) als auch die benutzerausrüstungsbezogene virtuelle Instanz oder virtuelle Maschine (22) zusammen die Funktionalität einer Benutzerausrüstung (20) realisieren, die mit dem Mobilkommunikationsnetz (100) verbunden ist,
wobei das Verfahren die folgenden Schritte umfasst:
- in einem ersten Schritt wird die benutzerausrüstungsbezogene virtuelle Instanz oder virtuelle Maschine (22) in dem Netzknoten (101) des Mobilkommunikationsnetzes (100) initialisiert, wobei der erste Schritt das Erzeugen der benutzerausrüstungsbezogenen virtuellen Instanz oder virtuellen Maschine (22) auf der Grundlage einer generischen Benutzerausrüstungsvorlagendatenbank (150), die Android-Basissoftware oder ein anbieterspezifisches Benutzerausrüstungsbild enthält, und das Konfigurieren der benutzerausrüstungsbezogenen virtuellen Instanz oder virtuellen Maschine (22) auf der Grundlage von Betreiberprofilinformationen über ein Betreiberprofilrepositorium (160) und auf der Grundlage von persönlichen Benutzereinstellungen über ein Benutzerdatenrepositorium (170) umfasst, wobei die Konfiguration der benutzerausrüstungsbezogenen virtuellen Instanz oder virtuellen Maschine (22) einer Konfiguration entspricht, die für den Betreiber des Mobilkommunikationsnetzes (100) spezifisch ist und durch den Betreiber des Mobilkommunikationsnetzes (100) optimiert wird, um eine reibungslose Interoperabilität mit dem Kernnetz des Mobilkommunikationsnetzes (100) zu gewährleisten, und speziell für einen Benutzer angepasst ist;
wobei das mobile Endgerät (21) mit der benutzerausrüstungsbezogenen virtuellen Instanz oder virtuellen Maschine (22) über eine Thin-Client-Software verbunden ist, die die Benutzerschnittstelle des mobilen Endgerätes (21) über ein IP-Protokoll mit der benutzerausrüstungsbezogenen virtuellen Instanz oder virtuellen Maschine (22) verbindet,
- in einem zweiten Schritt, im Anschluss an den ersten Schritt, wird ein Dienst durch die Benutzerausrüstung (20) angefordert oder der Benutzerausrüstung (20) durch das Mobilkommunikationsnetz (100) bereitgestellt, wobei - in Bezug auf den Dienst - das mobile Endgerät (21) und die benutzerausrüstungsbezogene virtuelle Instanz oder virtuelle Maschine (22) gemeinsam als die Benutzerausrüstung (20) agieren,
wobei der Dienst mindestens einem Teil der Funktionalitäten der Benutzerausrüstung (20) und mindestens einem von Folgendem entspricht:
- Session Initiation Protocol-bezogene (SIP-bezogene) Kommunikationsdienste,
- IP Multimedia Subsystem-bezogene (IMS-bezogene) Dienste.

2. Verfahren nach Anspruch 1, wobei in dem zweiten Schritt der durch die Benutzerausrüstung (20) angeforderte Dienst ein Kommunikationsdienst und/oder ein Verarbeitungsdienst ist, und/oder
wobei das mobile Endgerät (21) eine Benutzerschnittstelle umfasst, wobei sich der mobile Thin-Client insbesondere auf die Ausführung von Thin-Client-Softwarecode stützt, um die Benutzerschnittstelle - insbesondere einen Touchscreen und/oder Medienkomponenten wie einen Lautsprecher und/oder eine Kamera und/oder ein Mikrofon - des mobilen Endgerätes (21) mit der virtualisierten Benutzerausrüstungsfunktionalität zu verbinden, um anwendungsbezogenen Softwarecode in der virtualisierten Benutzerausrüstungsfunktionalität des Netzknotens (101) des Mobilkommunikationsnetzes (100) auszuführen.

3. Verfahren nach einem der vorangehenden Ansprüche, wobei der Dienst mindestens einem von Folgendem entspricht:
Sprachdienste und/oder Notrufdienste und/oder Videodienste und/oder SMS-over-IP-Dienste und/oder RCS (Rich Communication Service)-Dienste.

4. Verfahren nach einem der vorangehenden Ansprüche, wobei der Kommunikationsdienst als eine virtualisierte Benutzerausrüstungsanwendung oder als eine Netzfunktion in dem Mobilfunknetz (100) bereitgestellt wird, und/oder wobei eine mobile Thin-Client-Schnittstelle zwischen dem mobilen Endgerät (21) einerseits und der benutzerausrüstungsbezogenen virtuellen Instanz oder virtuellen Maschine (22) andererseits realisiert wird.

5. Verfahren nach einem der vorangehenden Ansprüche, wobei die generische Benutzerausrüstungsvorlagendatenbank (150) und/oder das Betreiberprofilrepositiorium (160) und/oder das Benutzerdatenrepositiorium (170) Teil des Mobilkommunikationsnetzes (100) ist oder dem Mobilkommunikationsnetz (100) zugewiesen ist.

6. Verfahren nach einem der vorangehenden Ansprüche, wobei das Verfahren zusätzlich einen dritten Schritt umfasst, der entweder dem ersten Schritt vorausgeht oder auf den zweiten Schritt folgt,
wobei in dem dritten Schritt ein weiterer Kommunikationsdienst durch das mobile Endgerät (21) angefordert oder dem mobilen Endgerät (21) durch das Mobilfunknetz (100) bereitgestellt wird, wobei - mit Bezug auf den weiteren Kommunikationsdienst - das mobile Endgerät (21) entweder als die Benutzerausrüstung (20) oder als eine andere Benutzerausrüstung (20') des Mobilfunknetzes (100) agiert.

7. System, umfassend ein mobiles Endgerät (21), eine benutzerausrüstungsbezogene virtuelle Instanz oder virtuelle Maschine (22) und einen Netzknoten (101) eines Mobilkommunikationsnetzes (100),
wobei das Mobilkommunikationsnetz (100) ein Zugangsnetz und ein Kernnetz umfasst,
wobei der Netzknoten (101), der zu dem Mobilkommunikationsnetz (100) gehört oder zu dem Mobilkommunikationsnetz (100) in Beziehung steht, eine virtualisierte Benutzerausrüstungsfunktionalität hostet oder bereitstellt, indem er die benutzerausrüstungsbezogene virtuelle Instanz oder virtuelle Maschine (22) hostet oder bereitstellt,
wobei sowohl das mobile Endgerät (21) als auch die benutzerausrüstungsbezogene virtuelle Instanz oder virtuelle Maschine (22) zusammen die Funktionalität einer mit dem Mobilkommunikationsnetz (100) verbundenen Benutzerausrüstung (20) realisieren,
wobei das System so eingerichtet ist, dass:
- die benutzerausrüstungsbezogene virtuelle Instanz oder virtuelle Maschine (22) in dem Netzwerkknoten (101) des Mobilkommunikationsnetzwerks (100) initialisiert wird, wobei das Initialisieren der benutzerausrüstungsbezogenen virtuellen Instanz oder virtuellen Maschine (22) in dem Netzknoten (101) des Mobilkommunikationsnetzes (100) das Erzeugen der benutzerausrüstungsbezogenen virtuellen Instanz oder virtuellen Maschine (22) auf der Grundlage einer generischen Benutzerausrüstungsvorlagendatenbank (150), die Android-Basissoftware oder ein anbieterspezifisches Benutzerausrüstungsbild enthält, und das Konfigurieren der benutzerausrüstungsbezogenen virtuellen Instanz oder virtuellen Maschine (22) auf der Grundlage von Betreiberprofilinformationen über ein Betreiberprofilrepositorium (160) und auf der Grundlage von persönlichen Benutzereinstellungen über ein Benutzerdatenrepositorium (170) umfasst, wobei die Konfiguration der benutzerausrüstungsbezogenen virtuellen Instanz oder virtuellen Maschine (22) einer Konfiguration entspricht, die für den Betreiber des Mobilkommunikationsnetzes (100) spezifisch ist und durch den Betreiber des Mobilkommunikationsnetzes (100) optimiert wird, um eine reibungslose Interoperabilität mit dem Kernnetz des Mobilkommunikationsnetzes (100) zu gewährleisten, und speziell für einen Benutzer angepasst ist;
wobei das mobile Endgerät (21) mit der benutzerausrüstungsbezogenen virtuellen Instanz oder virtuellen Maschine (22) über eine Thin-Client-Software verbunden ist, die die Benutzerschnittstelle des mobilen Endgerätes (21) über ein IP-Protokoll mit der benutzerausrüstungsbezogenen virtuellen Instanz oder virtuellen Maschine (22) verbindet,
- ein Kommunikationsdienst durch die Benutzerausrüstung (20) angefordert oder der Benutzerausrüstung (20) durch das Mobilkommunikationsnetz (100) bereitgestellt wird, wobei - in Bezug auf einen solchen Kommunikationsdienst - das mobile Endgerät (21) und die benutzerausrüstungsbezogene virtuelle Instanz oder virtuelle Maschine (22) gemeinsam als die Benutzerausrüstung (20) agieren,
wobei der Dienst mindestens einem Teil der Funktionalitäten der Benutzerausrüstung (20) und mindestens einem von Folgendem entspricht:
- Session Initiation Protocol-bezogene (SIP-bezogene) Kommunikationsdienste,
- IP Multimedia Subsystem-bezogene (IMS-bezogene) Dienste.

8. System nach Anspruch 7, wobei der Netzknoten (101) des Mobilkommunikationsnetzes (100) ein Netzknoten (101) entweder des Zugangsnetzes oder des Kernnetzes des Mobilkommunikationsnetzes (100) oder ein Netzknoten (101) eines mit dem Mobilkommunikationsnetz (100) verbundenen Netzes ist.

9. System nach einem der Ansprüche 7 und 8, wobei der Kommunikationsdienst mindestens einem von Folgendem entspricht:
Sprachdienste und/oder Notrufdienste und/oder Videodienste und/oder SMS-over-IP-Dienste und/oder RCS (Rich Communication Service)-Dienste.

10. System nach einem der Ansprüche 7 bis 9, wobei der Kommunikationsdienst als eine virtualisierte Benutzerausrüstungsanwendung oder als eine Netzfunktion in dem Mobilfunknetz (100) bereitgestellt wird, und/oder wobei eine mobile Thin-Client-Schnittstelle zwischen dem mobilen Endgerät (21) einerseits und der benutzerausrüstungsbezogenen virtuellen Instanz oder virtuellen Maschine (22) andererseits realisiert wird.

11. Programm, das einen computerlesbaren Programmcode umfasst, der, wenn er teilweise in dem Netzwerkknoten (101) des Mobilkommunikationsnetzwerks (100) und teilweise in der benutzerausrüstungsbezogenen virtuellen Instanz oder virtuellen Maschine (22) und teilweise in dem mobilen Endgerät (21) ausgeführt wird, den Netzwerkknoten (101) des Mobilkommunikationsnetzwerks (100) und die benutzerausrüstungsbezogene virtuelle Instanz oder virtuelle Maschine (22) und das mobile Endgerät (21) veranlasst, ein Verfahren nach einem der Ansprüche 1 bis 6 durchzuführen.

12. Computerprogrammprodukt zur Verwendung eines mobilen Endgerätes (21) in einem Mobilkommunikationsnetz (100), wobei das Computerprogrammprodukt ein auf einem Speichermedium gespeichertes Computerprogramm umfasst, wobei das Computerprogramm Programmcode umfasst, der, wenn er teilweise in dem Netzwerkknoten (101) des Mobilkommunikationsnetzwerks (100) und teilweise in der benutzerausrüstungsbezogenen virtuellen Instanz oder virtuellen Maschine (22) und teilweise in dem mobilen Endgerät (21) ausgeführt wird, den Netzwerkknoten (101) des Mobilkommunikationsnetzwerks (100) und die benutzerausrüstungsbezogene virtuelle Instanz oder virtuelle Maschine (22) und das mobile Endgerät (21) veranlasst, ein Verfahren nach einem der Ansprüche 1 bis 6 durchzuführen.

## Revendications

1. Procédé d'utilisation d'un système comprenant un terminal mobile (21), une instance virtuelle ou une machine virtuelle liée à l'équipement utilisateur (22), et un noeud de réseau (101) d'un réseau de communication mobile (100), dans lequel le réseau de communication mobile (100) comprend un réseau d'accès et un réseau central,
dans lequel le noeud de réseau (101) du réseau de communication mobile (100) ou lié au réseau de communication mobile (100) héberge ou fournit une fonctionnalité d'équipement utilisateur virtualisée en hébergeant ou en fournissant l'instance virtuelle ou la machine virtuelle liée à l'équipement utilisateur (22),
dans lequel le terminal mobile (21) et l'instance virtuelle ou la machine virtuelle liée à l'équipement utilisateur (22) réalisent ensemble la fonctionnalité d'un équipement utilisateur (20) connecté au réseau de communication mobile (100), dans lequel le procédé comprend les étapes suivantes :
- dans une première étape, l'instance virtuelle ou la machine virtuelle liée à l'équipement utilisateur (22) est initialisée au niveau du noeud de réseau (101) du réseau de communication mobile (100), dans lequel la première étape consiste à créer l'instance virtuelle ou la machine virtuelle liée à l'équipement utilisateur (22) sur la base d'une base de données de modèles d'équipements utilisateurs génériques (150) qui contient un logiciel de base Android ou une image d'équipement utilisateur spécifique à un fournisseur et à configurer l'instance virtuelle ou la machine virtuelle liée à l'équipement utilisateur (22) sur la base d'informations de profil d'opérateur par l'intermédiaire d'un référentiel de profils d'opérateurs (160) et sur la base de paramètres personnels d'utilisateurs par l'intermédiaire d'un référentiel de données d'utilisateurs (170), dans lequel la configuration de l'instance virtuelle ou de la machine virtuelle liée à l'équipement utilisateur (22) correspond à une configuration propre à l'opérateur du réseau de communication mobile (100), optimisée par l'opérateur du réseau de communication mobile (100) pour garantir une interopérabilité sans friction avec le réseau central du réseau de communication mobile (100), et est personnalisée pour un utilisateur ;
dans lequel le terminal mobile (21) est connecté à l'instance virtuelle ou à la machine virtuelle liée à l'équipement utilisateur (22) par l'intermédiaire d'un logiciel client léger qui connecte l'interface utilisateur du terminal mobile (21), par l'intermédiaire du protocole IP, à l'instance virtuelle ou à la machine virtuelle liée à l'équipement utilisateur (22),
- dans une deuxième étape, subséquente à la première étape, un service est demandé par l'équipement utilisateur (20) ou fourni à l'équipement utilisateur (20) par le réseau de communication mobile (100), dans lequel - en ce qui concerne le service - le terminal mobile (21) et l'instance virtuelle ou la machine virtuelle liée à l'équipement utilisateur (22) agissent ensemble en tant qu'équipement utilisateur (20),
dans lequel le service correspond à au moins une partie des fonctionnalités de l'équipement utilisateur (20) et à au moins l'un parmi ce qui suit :
- des services de communication liés au protocole d'initiation de session, SIP,
- des services liés au sous-système multimédia IP, liés à l'IMS.

2. Procédé selon la revendication 1, dans lequel, dans la deuxième étape, le service demandé par l'équipement utilisateur (20) est un service de communication et/ou un service de traitement, et/ou
dans lequel le terminal mobile (21) comprend une interface utilisateur, le client léger mobile s'appuyant en particulier sur l'exécution du code logiciel du client léger pour connecter l'interface utilisateur - en particulier un écran tactile et/ou des composants médias tels qu'un haut-parleur et/ou une caméra et/ou un microphone - du terminal mobile (21) à la fonctionnalité d'équipement utilisateur virtualisée afin d'exécuter un code logiciel lié à l'application sur la fonctionnalité d'équipement utilisateur virtualisée du noeud de réseau (101) du réseau de communication mobile (100).

3. Procédé selon l'une des revendications précédentes, dans lequel le service correspond à au moins l'un parmi :
des services vocaux et/ou des services d'urgence et/ou des services vidéo et/ou des services SMS sur IP et/ou des services RCS (Service de communication riche).

4. Procédé selon l'une des revendications précédentes, dans lequel le service de communication est fourni en tant qu'application d'équipement utilisateur virtualisée ou en tant que fonction de réseau dans le réseau de communication mobile (100), et/ou
dans lequel une interface de client léger mobile est réalisée entre le terminal mobile (21), d'une part, et l'instance virtuelle ou la machine virtuelle liée à l'équipement utilisateur (22), d'autre part.

5. Procédé selon l'une des revendications précédentes, dans lequel la base de données de modèles d'équipements utilisateurs génériques (150) et/ou le référentiel de profils d'opérateurs (160) et/ou le référentiel de données d'utilisateurs (170) font partie du réseau de communication mobile (100) ou lui sont attribués.

6. Procédé selon l'une des revendications précédentes, dans lequel le procédé comprend en outre une troisième étape, soit précédant la première étape, soit subséquente à la deuxième étape,
dans la troisième étape, un autre service de communication est demandé par le terminal mobile (21) ou fourni au terminal mobile (21) par le réseau de communication mobile (100), dans lequel - en ce qui concerne l'autre service de communication - le terminal mobile (21) agit soit en tant qu'équipement utilisateur (20), soit en tant qu'autre équipement utilisateur (20') du réseau de communication mobile (100).

7. Système comprenant un terminal mobile (21), une instance virtuelle ou une machine virtuelle liée à l'équipement utilisateur (22), et un noeud de réseau (101) d'un réseau de communication mobile (100),
dans lequel le réseau de communication mobile (100) comprend un réseau d'accès et un réseau central,
dans lequel le noeud de réseau (101) du réseau de communication mobile (100) ou lié au réseau de communication mobile (100) héberge ou fournit une fonctionnalité d'équipement utilisateur virtualisée en hébergeant ou en fournissant l'instance virtuelle ou la machine virtuelle liée à l'équipement utilisateur (22), dans lequel le terminal mobile (21) et l'instance virtuelle ou la machine virtuelle liée à l'équipement utilisateur (22) réalisent ensemble la fonctionnalité d'un équipement utilisateur (20) connecté au réseau de communication mobile (100), dans lequel le système est configuré de telle sorte que :
- l'instance virtuelle ou la machine virtuelle liée à l'équipement utilisateur (22) est initialisée au niveau du noeud de réseau (101) du réseau de communication mobile (100), dans lequel l'initialisation de l'instance virtuelle ou de la machine virtuelle liée à l'équipement utilisateur (22) au niveau du noeud de réseau (101) du réseau de communication mobile (100) consiste à créer l'instance virtuelle ou la machine virtuelle liée à l'équipement utilisateur (22) sur la base d'une base de données de modèles d'équipements utilisateurs génériques (150) qui contient un logiciel de base Android ou une image d'équipement utilisateur spécifique à un fournisseur et à configurer l'instance virtuelle ou la machine virtuelle liée à l'équipement utilisateur (22) sur la base d'informations de profil d'opérateur par l'intermédiaire d'un référentiel de profils d'opérateurs (160) et sur la base de paramètres personnels d'utilisateurs par l'intermédiaire d'un référentiel de données d'utilisateurs (170), dans lequel la configuration de l'instance virtuelle ou de la machine virtuelle liée à l'équipement utilisateur (22) correspond à une configuration propre à l'opérateur du réseau de communication mobile (100), optimisée par l'opérateur du réseau de communication mobile (100) pour garantir une interopérabilité sans friction avec le réseau central du réseau de communication mobile (100), et est personnalisée pour un utilisateur ;
dans lequel le terminal mobile (21) est connecté à l'instance virtuelle ou à la machine virtuelle liée à l'équipement utilisateur (22) par l'intermédiaire d'un logiciel client léger qui connecte l'interface utilisateur du terminal mobile (21), par l'intermédiaire du protocole IP, à l'instance virtuelle ou à la machine virtuelle liée à l'équipement utilisateur (22),
- un service de communication est demandé par l'équipement utilisateur (20) ou fourni à l'équipement utilisateur (20) par le réseau de communication mobile (100), dans lequel - en ce qui concerne ledit service de communication - le terminal mobile (21) et l'instance virtuelle ou la machine virtuelle liée à l'équipement utilisateur (22) agissent ensemble en tant qu'équipement utilisateur (20),
dans lequel le service correspond à au moins une partie des fonctionnalités de l'équipement utilisateur (20) et à au moins l'un parmi ce qui suit :
- des services de communication liés au protocole d'initiation de session, SIP,
- des services liés au sous-système multimédia IP, liés à l'IMS.

8. Système selon la revendication 7, dans lequel le noeud de réseau (101) du réseau de communication mobile (100) est un noeud de réseau (101) du réseau d'accès ou du réseau central du réseau de communication mobile (100) ou un noeud de réseau (101) d'un réseau connecté au réseau de communication mobile (100).

9. Système selon l'une des revendications 7 à 8, dans lequel le service de communication correspond à au moins l'un parmi :
des services vocaux et/ou des services d'urgence et/ou des services vidéo et/ou des services SMS sur IP et/ou des services RCS (Service de communication riche).

10. Système selon l'une des revendications 7 à 9, dans lequel le service de communication est fourni en tant qu'application d'équipement utilisateur virtualisée ou en tant que fonction de réseau dans le réseau de communication mobile (100), et/ou
dans lequel une interface de client léger mobile est réalisée entre le terminal mobile (21), d'une part, et l'instance virtuelle ou la machine virtuelle liée à l'équipement utilisateur (22), d'autre part.

11. Programme comprenant un code de programme lisible par ordinateur qui, lorsqu'il est exécuté en partie sur le noeud de réseau (101) du réseau de communication mobile (100) et en partie sur l'instance virtuelle ou la machine virtuelle liée à l'équipement utilisateur (22) et en partie sur le terminal mobile (21), amène le noeud de réseau (101) du réseau de communication mobile (100) et l'instance virtuelle ou la machine virtuelle liée à l'équipement utilisateur (22) et le terminal mobile (21) à effectuer un procédé selon l'une des revendications 1 à 6.

12. Produit programme d'ordinateur pour l'utilisation d'un terminal mobile (21) dans un réseau de communication mobile (100), le produit programme d'ordinateur comprenant un programme d'ordinateur stocké sur un support de stockage, le programme d'ordinateur comprenant un code de programme qui, lorsqu'il est exécuté en partie sur le noeud de réseau (101) du réseau de communication mobile (100) et en partie sur l'instance virtuelle ou la machine virtuelle liée à l'équipement utilisateur (22) et en partie sur le terminal mobile (21), amène le noeud de réseau (101) du réseau de communication mobile (100) et l'instance virtuelle ou la machine virtuelle liée à l'équipement utilisateur (22) et le terminal mobile (21) à effectuer un procédé selon l'une des revendications 1 à 6.
